# EUROPÄISCHE PATENTSCHRIFT

(11) **EP 3 594 556 B1**
(45) Veröffentlichungstag und Bekanntmachung des Hinweises auf die Patenterteilung: **25.08.2021**
(21) Anmeldenummer: 19185671.5
(22) Anmeldetag: 11.07.2019
(51) Int. Cl.: F21K 9/237, F21K 9/238, F21S 41/141, F21S 43/14, F21S 45/10, F21S 45/47

(54) **LED-LEUCHTE FÜR EIN FAHRZEUG UND FAHRZEUG MIT EINER LED-LEUCHTE**
LED LIGHT FOR A VEHICLE AND VEHICLE COMPRISING AN LED LIGHT
APPAREIL D'ÉCLAIRAGE LED POUR UN VÉHICULE ET VÉHICULE DOTÉ D'UN APPAREIL D'ÉCLAIRAGE LED

(30) Priorität: 13.07.2018 DE 102018117057
(43) Veröffentlichungstag der Anmeldung: 15.01.2020
(73) Patentinhaber: HELLA GmbH & Co. KGaA, 59552 Lippstadt (DE)
(72) Erfinder: FELDGEN, Michael, 59555 Lippstadt (DE); GRÖNE, Stefan, 33034 Brakel (DE); SCHULTE, Achim, 59755 Arnsberg (DE)

(56) Entgegenhaltungen:
- WO-A1-2009/037053
- WO-A1-2013/014580
- DE-A1-102014 019 475

## Beschreibung

Die vorliegende Erfindung betrifft eine LED-Leuchte für ein Fahrzeug, insbesondere für einen Trailer. Ferner betrifft die Erfindung ein Fahrzeug, insbesondere einen Trailer, mit einer erfindungsgemäßen LED-Leuchte.

Trailer weisen Rückleuchten auf, welche zumeist mittels eines Steuerkabels mit einem Zugfahrzeug elektrisch gekoppelt sind. Die Rückleuchten sind zur Bereitstellung unterschiedlicher Leuchtfunktionen ausgebildet. Leuchtfunktionen sind beispielsweise ein Rücklicht zum Markieren eines Hecks des Trailers, ein Bremslicht zum Anzeigen der Betätigung einer Bremse, ein Rückfahrlicht zum Anzeigen der Wahl eines Rückwärtsgangs des Zugfahrzeugs und ein Blinklicht zum Anzeigen einer Fahrtrichtungsänderungswahl des Zugfahrzeugs. Über das Steuerkabel sind die für die unterschiedlichen Leuchtfunktionen ausgebildeten Leuchtelemente der Rückleuchte gezielt mit Strom beaufschlagbar, und somit sind die einzelnen Leuchtfunktionen vom Zugfahrzeug aus steuerbar.

Besonders verbreitet sind Rückleuchten, in welchen als austauschbare Leuchtmittel Glühlampen mit einer Glühwendel verbaut sind. Die Glühwendel ist in der Regel aus einem dünnen Wolframdraht hergestellt. Das Ansteuern derartiger Leuchtmittel erfolgt durch Bereitstellung eines elektrischen Stroms von dem Zugfahrzeug über das Steuerkabel. Moderne Rückleuchten weisen anstatt einer Glühlampe mit Glühwendel eine Vielzahl von LED-Leuchtmitteln auf, welche auf einer Leiterplatte angeordnet und somit zu einem LED-Leuchtmodul zusammengefasst sind. LED-Leuchtmittel haben den Vorteil einer wesentlich höheren Lebensdauer sowie eines geringeren Stromverbrauches aufgrund eines besseren Wirkungsgrads als Glühlampen mit Glühwendel.

Da die Schnittstelle herkömmlicher Zugfahrzeuge zum Steuerkabel grundsätzlich auf Glühlampen mit Glühwendel ausgerichtet ist und LED-Leuchtmodule wesentlich geringere Leistungen als Glühlampen mit Glühwendel aufweisen, ist ein direkter Anschluss des LED-Leuchtmoduls an das Steuerkabel nicht möglich. Hierfür werden sogenannte Lastsimulationsvorrichtungen verwendet, welche am Zugfahrzeug oder Trailer angeordnet werden und eine elektrische Charakteristik einer Glühlampe mit Glühwendel simulieren. Hierzu zählen beispielsweise eine Leistung, eine Veränderung des Widerstands nach einem "Kaltstart" der Glühlampe oder dergleichen. Die Verlustleistung einer Lastsimulationsvorrichtung wird in Form von Wärme abgegeben, deshalb werden herkömmliche Lastsimulationsvorrichtungen üblicherweise an einer gut belüfteten Stelle am Zugfahrzeug oder Trailer angeordnet. Die WO 2009/037053 A1, DE 10 2014 019 475 A1 und WO 2013/014580 A1 offenbaren verschiedene Leuchtmittel sowie Schaltungen für Leuchtmittel.

Bekannte LED-Leuchten haben den Nachteil, dass diese nur sehr aufwendig sowie mit einer Vielzahl von Montageschritten montierbar sind. So sind beispielsweise relativ viele Kabelverbindungen bei der Montage herzustellen, wie beispielsweise eine Kabelverbindung zwischen dem Zugfahrzeug und der Lastsimulationsvorrichtung sowie zwischen der Lastsimulationsvorrichtung und dem LED-Leuchtmodul. Ein Nachrüsten eines Fahrzeugs von Leuchten mit Glühlampen auf LED-Leuchten ist daher verhältnismäßig teuer. Ferner hat die Vielzahl der erforderlichen Kabelverbindungen den Nachteil besonders vieler Fehlerquellen, die allesamt zum Funktionsausfall der LED-Leuchte führen können. Schließlich weisen derartige LED-Leuchten aufgrund der dezentralen Anordnungen einen besonders hohen Bauraumbedarf auf.

Es ist daher die Aufgabe der vorliegenden Erfindung, eine LED-Leuchte für ein Fahrzeug sowie ein Fahrzeug mit einer LED-Leuchte bereitzustellen, welche die Nachteile des Standes der Technik nicht aufweisen oder zumindest teilweise nicht aufweisen. Es ist insbesondere die Aufgabe der vorliegenden Erfindung, eine LED-Leuchte sowie ein Fahrzeug zu schaffen, welche auf eine einfache Art und Weise sowie kostengünstig montierbar sind und/oder einen geringeren Bauraumbedarf aufweisen und/oder eine reduzierte Fehleranfälligkeit aufweisen.

Voranstehende Aufgabe wird durch die Patentansprüche gelöst. Demnach wird die Aufgabe durch eine LED-Leuchte für ein Fahrzeug gemäß dem unabhängigen Anspruch 1 und durch ein Fahrzeug mit einer LED-Leuchte gemäß dem nebengeordneten Anspruch 6 gelöst.

Gemäß einem ersten Aspekt der Erfindung wird die Aufgabe durch eine LED-Leuchte für ein Fahrzeug gelöst. Die LED-Leuchte weist ein Leuchtengehäuse und ein LED-Leuchtmodul mit einer Mehrzahl von LEDs auf. Das LED-Leuchtmodul ist innerhalb des Leuchtengehäuses angeordnet. Erfindungsgemäß weist die LED-Leuchte eine Lastsimulationsvorrichtung zum Simulieren einer elektrischen Charakteristik einer Glühbirne mit einer Glühwendel auf. Die Lastsimulationsvorrichtung ist am Leuchtengehäuse und/oder innerhalb des Leuchtengehäuses angeordnet. Die LED-Leuchte ist vorzugsweise als Rückleuchte, insbesondere für einen Trailer, ausgebildet.

Das Leuchtengehäuse ist vorzugsweise mehrteilig ausgebildet. Das Leuchtengehäuse weist vorzugsweise eine Lichtscheibe, insbesondere aus einem lichtdurchlässigen Kunststoff, Glas oder dergleichen, auf. Vorzugsweise ist die Lichtscheibe napfförmig ausgebildet und weist eine Hauptfläche sowie mehrere, insbesondere vier, Seitenflächen auf. Vorzugsweise weist das Leuchtengehäuse eine Rückwand oder eine Rückwandvorrichtung zum Schließen des Leuchtengehäuses auf. Unter einer Rückwandanordnung wird beispielsweise eine Kombination aus einer Haltevorrichtung, insbesondere ein Halterahmen, und einer weiteren Komponente der LED-Leuchte verstanden, welche im Zusammenspiel eine Rückwand des Leuchtengehäuses substituieren. Die Rückwand bzw. Rückwandvorrichtung weist vorzugsweise eine Rastvorrichtung zum Verrasten an der Lichtscheibe und/oder dem LED-Leuchtmodul auf. Das Leuchtengehäuse ist vorzugsweise zur Aufnahme der übrigen Komponenten der LED-Leuchte, insbesondere des LED-Leuchtmoduls, ausgebildet. Ferner kann vorgesehen sein, dass eine oder mehrere Komponenten der LED-Leuchte, insbesondere witterungsbeständige Komponenten, einen Teil des Leuchtengehäuses bilden. Das Leuchtengehäuse ist vorzugsweise nach außen abgedichtet, um die darin angeordneten Komponenten der LED-Leuchte vor äußeren Einflüssen zu schützen.

Das LED-Leuchtmodul weist vorzugsweise eine Leiterplatte auf, auf welcher die LEDs als sogenannte "surface mount devices" (SMD) angeordnet sind. Die Seite der Leiterplatte, an welcher die LEDs bzw. ein Großteil der LEDs angeordnet ist, wird im Rahmen der Erfindung auch als lichtemittierende Seite bezeichnet. Die LEDs können erfindungsgemäß als einfarbige und/oder mehrfarbige LEDs ausgebildet sein. Ein derartiges LED-Leuchtmodul kann auch als LED-Panel bezeichnet werden. Es kann erfindungsgemäß vorgesehen sein, dass das LED-Leuchtmodul in eine lichtdurchlässige Vergussmasse derart eingegossen ist, dass zumindest die lichtemittierende Seite der Leiterplatte, vorzugsweise inklusive der darauf angeordneten LEDs, von der Vergussmasse abgedeckt ist. Somit ist die lichtemittierende Seite vor äußeren Einflüssen, insbesondere Feuchtigkeit, Regen, Schnee, Schutz oder dergleichen, geschützt. In diesem Fall kann auf eine zusätzliche Lichtscheibe verzichtet werden, sodass das LED-Leuchtmodul mit Vergussmasse einen Teil des Leuchtengehäuses bildet. Hierdurch können die Herstellungskosten der LED-Leuchte reduziert werden.

Die Lastsimulationsvorrichtung ist zum Simulieren der elektrischen Charakteristik einer Glühbirne mit einer Glühwendel, insbesondere im Zusammenspiel mit dem LED-Leuchtmodul, ausgebildet. Unter einer elektrischen Charakteristik wird beispielsweise ein elektrischer Widerstand, eine elektrische Leistung im Betrieb verstanden. Ein wichtiger Einflussfaktor hierauf ist beispielsweise eine jüngste Betriebshistorie der LED-Leuchte. Eine durch Benutzung bereits erwärmte Glühbirne weist einen höheren ohmschen Widerstand als eine kalte Glühbirne auf. Der ohmsche Widerstand einer kalten Glühbirne wird nach dem Beaufschlagen mit Strom rasch ansteigen und sich einem charakteristischen Grenzwert nähern. Ein solches Verhalten einer Glühbirne ist mittels der Lastsimulationsvorrichtung simulierbar. Hierfür weist die Lastsimulationsvorrichtung vorzugsweise einen oder mehrere Lastwiderstände auf, welche insbesondere als SMD Bauteile, beispielsweise als Widerstandsanordnung, auf einer Leiterplatte angeordnet sind. Die Lastsimulationsvorrichtung ist ebenfalls innerhalb des Leuchtengehäuses angeordnet.

Erfindungsgemäß ist die Lastsimulationsvorrichtung auf einer Lastleiterplatte und das LED-Leuchtmodul auf einer LED-Leiterplatte angeordnet, wobei zwischen der Lastleiterplatte und der LED-Leiterplatte ein thermischer Isolator angeordnet ist. Die Lastleiterplatte und die LED-Leiterplatte sind vorzugsweise als separate Leiterplatten ausgebildet. Ferner sind die Lastleiterplatte und die LED-Leiterplatte vorzugsweise parallel zueinander sowie voneinander beabstandet angeordnet. Der thermische Isolator ist vorzugsweise als thermische Isolationsschicht, insbesondere aus einem thermisch dämmenden Material, insbesondere einem porösen, geschäumten oder zellstoffartig aufgebauten Material, ausgebildet. Der thermische Isolator weist daher vorzugsweise einen besonders niedrigen Wärmeleitkoeffizienten, wie beispielsweise PUR, EPS, Mineralwolle oder dergleichen, auf. Der thermische Isolator, ist zwischen der Lastleiterplatte und der LED-Leiterplatte, insbesondere in einer Sandwichanordnung, angeordnet. Ein derartiger Aufbau hat den Vorteil, dass eine Wärmetrennung zwischen der Lastsimulationsvorrichtung und dem LED-Leuchtmodul verbessert ist. Das Risiko des Beschädigens des LED-Leuchtmoduls durch die Abwärme der Lastsimulationsvorrichtung ist somit kostengünstig sowie auf eine einfache Art und Weise reduzierbar.

Eine erfindungsgemäße LED-Leuchte für ein Fahrzeug hat gegenüber herkömmlichen LED-Leuchten den Vorteil, dass durch die Integration der Lastsimulationsvorrichtung in die LED-Leuchte mit einfachen Mitteln sowie auf eine kostengünstige Art und Weise eine integrale LED-Leuchte bereitgestellt ist, welche leicht verbaubar sowie einfacher elektrisch anschließbar ist. Zudem benötigt die erfindungsgemäße LED-Leuchte einen geringeren Bauraum und weist aufgrund der geringeren erforderlichen Anzahl externer Verkabelungen eine verringerte Fehleranfälligkeit auf.

Gemäß einer bevorzugten Weiterentwicklung der Erfindung kann bei einer LED-Leuchte vorgesehen sein, dass die LED-Leuchte eine Ausfallkontrollvorrichtung zum Detektieren sowie zum Melden eines Defekts des LED-Leuchtmoduls aufweist, wobei die Ausfallkontrollvorrichtung innerhalb des Leuchtengehäuses angeordnet ist. Die Ausfallkontrollvorrichtung ist vorzugsweise ausgebildet, bei Detektion eines vorgegebenen Fehlergrads des LED-Leuchtmoduls, wenn beispielsweise eine LED oder zwei LEDs ausgefallen sind, die LED-Leuchte oder zumindest ein LED-Leuchtmodul der LED-Leuchte abzuschalten, insbesondere zur Vermeidung von weiteren Beschädigungen durch Überspannungen, hohe Ströme, Überhitzungen oder dergleichen. Zudem ist die Ausfallkontrollvorrichtung vorzugsweise ausgebildet, den Detektierten Ausfall von LEDs oder dem LED-Leuchtmodul zu melden, beispielsweise über die Lastsimulationsvorrichtung. Daher ist es bevorzugt, dass die Lastsimulationsvorrichtung und die Ausfallkontrollvorrichtung gemeinsam eine funktionale Einheit bilden, insbesondere auf einer gemeinsamen Leiterplatte angeordnet sind. Die Lastsimulationsvorrichtung und/oder die Ausfallkontrollvorrichtung sind vorzugsweise ausgebildet, einen solchen Ausfall an eine Lichtsteuerung des Zugfahrzeugs weiterzuleiten, insbesondere an eine Warnleuchte, einen Warnsummer oder dergleichen.

Erfindungsgemäss weist die LED-Leuchte eine Kühlvorrichtung zum Kühlen der LED-Leuchte auf, wobei die Kühlvorrichtung mit der Lastleiterplatte thermisch leitend gekoppelt ist. Die Kühlvorrichtung kann beispielsweise direkt an die Lastleiterplatte angebunden sein, insbesondere durch direktes Kontaktieren, insbesondere von Lastwiderständen der Lastsimulationsvorrichtung, da an diesen im Betrieb besonders viel Wärme erzeugt wird. Die Kühlvorrichtung weist vorzugsweise eine Mehrzahl von Kühlrippen auf, welche sich von der Lastleiterplatte weg erstrecken. Weiter bevorzugt weist die Kühlvorrichtung eine der Lastleiterplatte zugewandte Kühlfläche auf, welche eine möglichst große Kontaktfläche zur Lastleiterplatte bzw. zumindest zu den Lastwiderständen, bereitstellt. Vorzugsweise sind die Kühlvorrichtung und die Lichtscheibe ausgebildet, miteinander zu verrasten. Hierfür weisen die Kühlvorrichtung und/oder die Lichtscheibe Rastelemente auf, welche mit entsprechenden Rastaufnahmen der Lichtscheibe bzw. der Kühlvorrichtung kooperieren. Eine Kühlvorrichtung hat den Vorteil, dass insbesondere von der Lastsimulationsvorrichtung produzierte Wärme von dem LED-Leuchtmoduls wegführbar ist, sodass ein Überhitzen des LED-Leuchtmoduls besser vermeidbar ist.

Es kann erfindungsgemäß vorgesehen sein, dass die Kühlvorrichtung über eine Wärmeleitvorrichtung mit der Lastleiterplatte, insbesondere mit einer Rückseite der Lastleiterplatte, thermisch leitend gekoppelt ist. Unter einer thermisch leitenden Kopplung mit der Lastleiterplatte wird erfindungsgemäß auch eine thermische leitende Kopplung mit den auf der Lastleiterplatte angeordneten SMD-Bauteilen, wie beispielsweise den Lastwiderständen der Lastsimulationsvorrichtung, verstanden. Bei einer Sandwichanordnung mit einer LED-Leiterplatte und einer Lastleiterplatte kann auch vorgesehen sein, dass die Wärmeleitvorrichtung die Lastleiterplatte umgibt, wobei der thermische Isolator vorzugsweise zwischen der Wärmeleitvorrichtung und der LED-Leiterplatte angeordnet ist. Die Wärmeleitvorrichtung ist vorzugsweise als Wärmeleitplatte, Wärmeleitkissen oder Wärmeleitgel ausgebildet. Zudem kann die Wärmeleitvorrichtung als von der Kühlvorrichtung separate Wärmeleitvorrichtung oder als in die Kühlvorrichtung integrierte Wärmeleitvorrichtung ausgebildet sein. Die Wärmeleitvorrichtung weist vorzugsweise einen besonders hohen Wärmeleitkoeffizienten, wie beispielsweise Kupfer, Silber oder dergleichen, auf. Die Wärmeleitvorrichtung ist weiter bevorzugt ausgebildet, sich einer Kontur der Rückseite der Lastleiterplatte bzw. der Lastsimulationsvorrichtung anzupassen, sodass eine Kontaktfläche zwischen Wärmeleitvorrichtung und der Rückseite der bestückten Lastleiterplatte vergrößerbar ist. Eine Wärmeleitvorrichtung hat den Vorteil, dass eine Wärmeabgabe von der Lastleiterplatte an die Kühlungsvorrichtung und somit eine Kühlung der Lastleiterplatte sowie der darauf angeordneten SMD-Bauteile verbessert ist.

Gemäß einer vorteilhaften Ausführungsform der Erfindung bildet die Kühlvorrichtung einen ersten Teilbereich des Leuchtengehäuses, wobei eine Trennfuge zwischen der Kühlvorrichtung und einem zweiten Teilbereich des Leuchtengehäuses mittels einer Vergussmasse abgedichtet ist. Der zweite Teilbereich des Leuchtengehäuses kann beispielsweise durch einen Rahmen gebildet sein, welcher zum Halten der Kühlvorrichtung an der Lichtscheibe ausgebildet ist, insbesondere über eine Rastvorrichtung. Trennfugen zwischen dem Rahmen und der Lichtscheibe sind vorzugsweise mittels einer Gummi- und/oder Silikondichtung abgedichtet. Eine derartige LED-Leuchte ist einfach aufgebaut und mit einfachen Mitteln sowie kostengünstig herstellbar.

Es ist bevorzugt, dass die LED-Leuchte als LED-Rückleuchte und/oder LED-Blinkleuchte ausgebildet ist. Eine als LED-Rückleuchte ausgebildete LED-Leuchte ist vorzugsweise zum Erzeugen eines, insbesondere weißen, Rückwärtsganglichts und/oder eines, insbesondere roten, Rücklichts und/oder eines, insbesondere roten, Nebelschlusslichts und/oder eines, insbesondere roten Bremslichts, ausgebildet. Dabei kann vorgesehen ein Die LED-Leuchte für einzelne Lichtarten mehrere LED-Leuchtmodule aufweist. Die LED-Leuchtmodule sind vorzugsweise auf einer gemeinsamen Leiterplatte angeordnet. Zudem kann erfindungsgemäß vorgesehen sein, dass die LED-Leuchte eine gemeinsame Ausfallkontrollvorrichtung oder separate Ausfallkontrollvorrichtungen für die LED-Leuchtmodule aufweist. Ebenso ist es bevorzugt, dass die LED für jedes LED-Leuchtmodul eine eigene Lastsimulationsvorrichtung oder für die Gesamtheit der LED-Leuchtmodule eine gemeinsame Lastsimulationsvorrichtung aufweist.

Gemäß einem zweiten Aspekt der Erfindung wird die Aufgabe durch ein Fahrzeug mit einer erfindungsgemäßen LED-Leuchte gelöst. Das Fahrzeug ist vorzugsweise als Trailer ausgebildet.

Bei dem erfindungsgemäßen Fahrzeug mit einer erfindungsgemäßen LED-Leuchte ergeben sich sämtliche Vorteile, die bereits zu einer LED-Leuchte für ein Fahrzeug gemäß dem ersten Aspekt der Erfindung beschrieben worden sind. Demnach hat das erfindungsgemäße Fahrzeug gegenüber herkömmlichen Fahrzeugen den Vorteil, dass dieses eine LED-Leuchte aufweist, welche durch die Integration der Lastsimulationsvorrichtung mit einfachen Mitteln sowie auf eine kostengünstige Art herstellbar sowie an dem Fahrzeug verbaubar ist. Zudem wird aufgrund der Integration der Lastsimulationsvorrichtung in die LED-Leuchte ein geringerer Bauraum am Fahrzeug beansprucht. Ein Austausch der LED-Leuchte ist insbesondere aufgrund der reduzierten Anzahl elektrischer Anschlüsse wesentlich erleichtert. Aufgrund der geringeren erforderlichen Anzahl externer Verkabelungen weist die LED-Leuchte des Fahrzeugs eine verringerte Fehleranfälligkeit auf.

Anhand der beigefügten Zeichnungen wird die Erfindung nachfolgend näher erläutert. Es zeigen jeweils schematisch:
- Fig. 1: in einer explodierten Darstellung eine bevorzugte erste Ausführungsform der erfindungsgemäßen LED-Leuchte,
- Fig. 2: in einer Seitenansicht die LED-Leuchte aus Figur 1 in einem zusammengebauten Zustand,
- Fig. 3: in einer Seitenansicht eine bevorzugte erste Ausführungsform der erfindungsgemäßen LED-Leuchte in einem zusammengebauten Zustand, und
- Fig. 4: in einer Seitenansicht eine bevorzugte Ausführungsform eines erfindungsgemäßen Fahrzeugs.

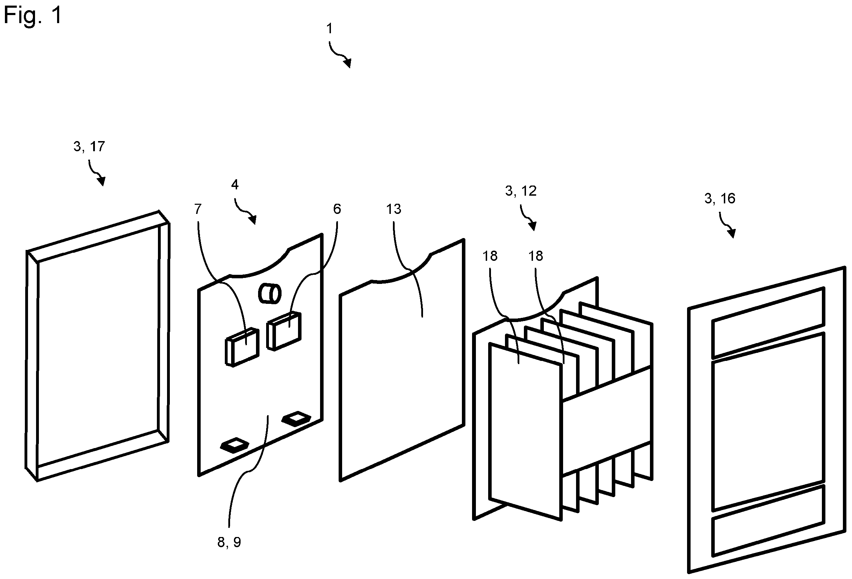

Elemente mit gleicher Funktion und Wirkungsweise sind in den Fig. 1 bis 4 jeweils mit denselben Bezugszeichen versehen.

In Fig. 1 ist eine bevorzugte erste Ausführungsform der erfindungsgemäßen LED-Leuchte 1 schematisch in einer explodierten Darstellung abgebildet. Die LED-Leuchte weist ein Leuchtengehäuse 3 auf, welches sich aus einer Lichtscheibe 17, einer Kühlvorrichtung 12 und einem Rahmen 16 zusammensetzt. Mittels des Rahmens 16 ist die Kühlvorrichtung 12 an der Lichtscheibe 17 fixierbar, insbesondere mittels einer Rastvorrichtung. Die LED-Leuchte 1 weist ein LED-Leuchtmodul 4 mit einer als Lastleiterplatte 9 ausgebildeten Leiterplatte 8 auf. In dieser Ansicht ist eine Rückseite der Lastleiterplatte 9 erkennbar. An der Rückseite der Lastleiterplatte 9 sind eine Lastsimulationsvorrichtung 6 sowie eine Ausfallkontrollvorrichtung 7 angeordnet. Zwischen dem LED-Leuchtmodul 4 und der Kühlvorrichtung 12 ist eine Wärmeleitvorrichtung 13 zum Ableiten von Wärme von der Lastsimulationsvorrichtung 6 sowie der Ausfallkontrollvorrichtung 7 zur Kühlvorrichtung 12. Die Kühlvorrichtung 12 weist mehrere Kühlrippen 18 auf.

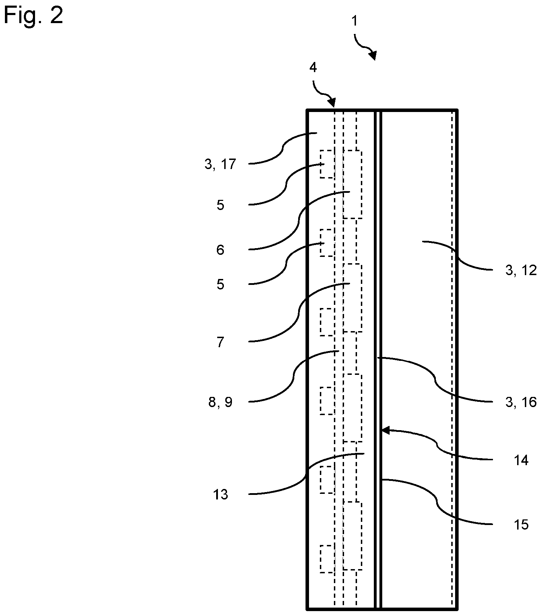

Fig. 2 zeigt die LED-Leuchte aus Fig. 1 in einem zusammengebauten Zustand schematisch in einer Seitenansicht. In dieser Ansicht ist erkennbar, dass die Lastsimulationsvorrichtung 6 und die Ausfallkontrollvorrichtung 7 auf der Rückseite der gemeinsamen als Lastleiterplatte 9 ausgebildeten Leiterplatte 8 angeordnet sind. Auf einer Vorderseite der Lastleiterplatte 9 sind mehrere LEDs 5 des LED-Leuchtmoduls 4 angeordnet. Zwischen dem Rahmen 16 und der Kühlvorrichtung 12 ist eine Trennfuge 14 ausgebildet, welche mittels einer Vergussmasse 15 abgedichtet ist. In diesem zusammengebauten Zustand kontaktiert die, vorzugsweise als Wärmeleitplatte ausgebildete, Wärmeleitvorrichtung 13 die Lastsimulationsvorrichtung 6 und die Ausfallkontrollvorrichtung 7.

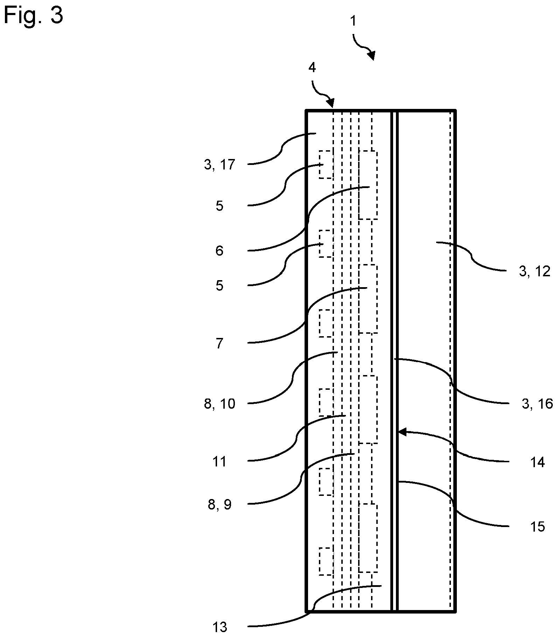

In Fig. 3 ist eine bevorzugte zweite Ausführungsform der erfindungsgemäßen LED-Leuchte 1 schematisch in einer Seitenansicht abgebildet. Die bevorzugte zweite Ausführungsform unterscheidet sich von der ersten Ausführungsform der erfindungsgemäßen LED-Leuchte 1 in den Merkmalen, dass die LEDs 5 des LED-Leuchtmoduls 4 auf einer als LED-Leiterplatte 10 ausgebildeten Leiterplatte 8 angeordnet sind. Die Lastsimulationsvorrichtung 6 und die Ausfallkontrollvorrichtung 7 sind auf einer als Lastleiterplatte 9 ausgebildeten Leiterplatte 8 angeordnet. Zwischen der LED-Leiterplatte 10 und der Lastleiterplatte 9 ist ein thermischer Isolator 11, insbesondere eine Dämmschicht, angeordnet. Auf diese Weise ist ein Wärmeübergang von der Lastsimulationsvorrichtung 6 und der Ausfallkontrollvorrichtung 7 auf die LED-Leiterplatte 10 reduziert, sodass die LEDs 5 einer geringeren thermischen Beanspruchung ausgesetzt sind.

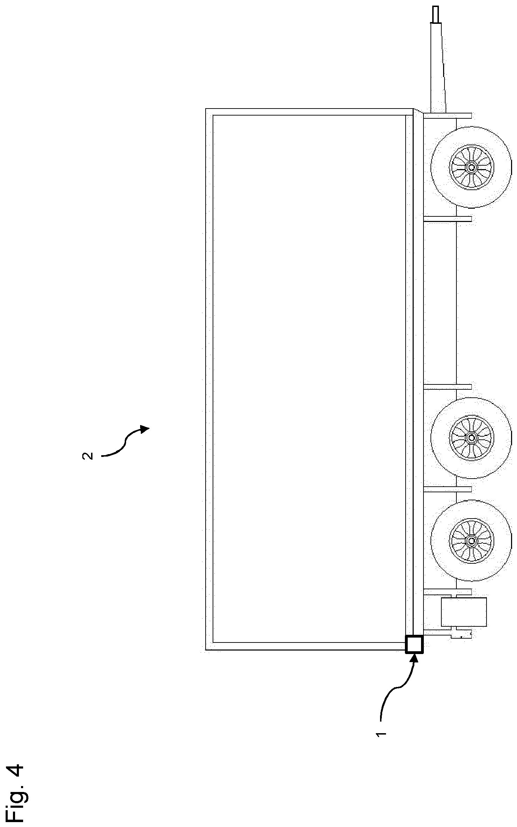

Fig. 4 zeigt eine bevorzugte Ausführungsform eines erfindungsgemäßen Fahrzeugs 2 schematisch in einer Seitenansicht. Das Fahrzeug 2 ist als Trailer ausgebildet und weist eine als Rückleuchte mit integrierter Blinkleuchte ausgebildete erfindungsgemäße LED-Leuchte 1 auf.

### Bezugszeichenliste

- 1: LED-Leuchte
- 2: Fahrzeug
- 3: Leuchtengehäuse
- 4: LED-Leuchtmodul
- 5: LED
- 6: Lastsimulationsvorrichtung
- 7: Ausfallkontrollvorrichtung
- 8: Leiterplatte
- 9: Lastleiterplatte
- 10: LED-Leiterplatte
- 11: thermischer Isolator
- 12: Kühlvorrichtung
- 13: Wärmeleitvorrichtung
- 14: Trennfuge
- 15: Vergussmasse
- 16: Rahmen
- 17: Lichtscheibe
- 18: Kühlrippe

## Patentansprüche

1. LED-Leuchte (1) für ein Fahrzeug (2), aufweisend ein Leuchtengehäuse (3) und ein LED-Leuchtmodul (4) mit einer Mehrzahl von LEDs (5), wobei das LED-Leuchtmodul (4) innerhalb des Leuchtengehäuses (3) angeordnet ist,
**dadurch gekennzeichnet, dass**
die LED-Leuchte (1) eine Lastsimulationsvorrichtung (6) zum Simulieren einer elektrischen Charakteristik einer Glühbirne mit einer Glühwendel aufweist, wobei die Lastsimulationsvorrichtung (6) am Leuchtengehäuse (3) und/oder innerhalb des Leuchtengehäuses (3) angeordnet ist, wobei die Lastsimulationsvorrichtung (6) auf einer Lastleiterplatte (9) und das LED-Leuchtmodul (4) auf einer LED-Leiterplatte (10) angeordnet ist, wobei zwischen der Lastleiterplatte (9) und der LED-Leiterplatte (10) ein thermischer Isolator (11) angeordnet ist, wobei die LED-Leuchte (1) eine Kühlvorrichtung (12) zum Kühlen der LED-Leuchte (1) aufweist, wobei die Kühlvorrichtung (12) mit der Lastleiterplatte (9) thermisch leitend gekoppelt ist.

2. LED-Leuchte (1) nach Anspruch 1,
**dadurch gekennzeichnet, dass**
die LED-Leuchte (1) eine Ausfallkontrollvorrichtung (7) zum Detektieren sowie zum Melden eines Defekts des LED-Leuchtmoduls (4) aufweist, wobei die Ausfallkontrollvorrichtung (7) innerhalb des Leuchtengehäuses (3) angeordnet ist.

3. LED-Leuchte (1) nach Anspruch 2,
**dadurch gekennzeichnet, dass**
die Kühlvorrichtung (12) über eine Wärmeleitvorrichtung (13) mit der Lastleiterplatte (9) thermisch leitend gekoppelt ist.

4. LED-Leuchte (1) nach Anspruch 3,
**dadurch gekennzeichnet, dass**
die Kühlvorrichtung (12) einen ersten Teilbereich des Leuchtengehäuses (3) bildet, wobei eine Trennfuge (14) zwischen der Kühlvorrichtung (12) und einem zweiten Teilbereich des Leuchtengehäuses (3) mittels einer Vergussmasse (15) abgedichtet ist.

5. LED-Leuchte (1) nach einem der vorangegangenen Ansprüche,
**dadurch gekennzeichnet, dass**
die LED-Leuchte (1) als LED-Rückleuchte und/oder LED-Blinkleuchte ausgebildet ist.

6. Fahrzeug (2),
**dadurch gekennzeichnet, dass**
das Fahrzeug (2) eine LED-Leuchte (1) nach einem der Ansprüche 1 bis 5 aufweist.

## Claims

1. LED lamp (1) for a vehicle (2), featuring a lamp housing (3) and an LED lamp module (4) with a plurality of LEDs (5), where the LED lamp module (4) is arranged inside the lamp housing (3),
**characterized in that**
the LED lamp (1) features a load simulation device (6) for simulating an electric characteristic of an electric bulb with a glowing spiral, where the load simulation device (6) is arranged at the lamp housing (3) and/or within the lamp housing (3), where the load simulation device (6) is arranged on a load printed circuit board (9) and the LED lamp module (4) is arranged on an LED printed circuit board (10), where a thermal isolator (11) is arranged between the load printed circuit board (9) and the LED printed circuit board (10), where the LED lamp (1) features a cooling device (12) for cooling the LED lamp (1), where the cooling device (12) is coupled to the load printed circuit board (9) so as to be thermally conductive.

2. LED lamp (1) in accordance with Claim 1,
**characterized in that**
the LED lamp (1) features a failure detection device (7) to detect and report any defect in the LED lamp module, (4) where the failure detection device (7) is arranged within the lamp housing (3).

3. LED lamp (1) in accordance with Claim 2,
**characterized in that**
the cooling device (12) is coupled to the load printed circuit board (9) via a thermally conductive device (13) so as to be thermally conductive.

4. LED lamp (1) in accordance with Claim 3,
**characterized in that**
the cooling device (12) forms a first part area of the lamp housing (3), where the separating gap (14) between the cooling device (12) and a second part area of the lamp housing (3) is sealed by means of a casting compound (15).

5. LED lamp (1) in accordance with one of the previous claims,
**characterized in that**
the LED lamp (1) is designed as an LED rear lamp and/or an LED indicator lamp.

6. Vehicle (2),
**characterized in that**
the vehicle (2) features an LED lamp (1) in accordance with one of Claims 1 through 5.

## Revendications

1. Feu à LED (1) pour un véhicule (2), comprenant un boîtier de feu (3) et un module d'éclairage à LED (4) avec plusieurs LED (5), le module d'éclairage à LED (4) étant disposé à l'intérieur du boîtier de feu (3),
**caractérisé en ce que**
le feu à LED (1) présente un dispositif de simulation de charge (6) pour simuler une ligne caractéristique électrique d'une ampoule à filament, le dispositif de simulation de charge (6) étant disposé sur le boîtier de feu (3) et/ou à l'intérieur du boîtier de feu (3), le dispositif de simulation de charge (6) étant disposé sur une carte de circuit de charge (9) et le module d'éclairage à LED (4) étant disposé sur une carte de circuits imprimés à LED (10) dans lequel un isolant thermique (11) est disposé entre la carte de circuit de charge (9) et la carte de circuits imprimés à LED (10), dans lequel le feu à LED (1) présente un dispositif de refroidissement (12) pour refroidir le feu à LED (1), le dispositif de refroidissement (12) étant couplé de manière thermoconductrice à la carte de circuit de charge (9).

2. Feu à LED (1) selon la revendication 1,
**caractérisé en ce que**
le feu à LED (1) présente un dispositif de contrôle des défaillances (7) pour détecter et signaler une défaillance du module d'éclairage à LED (4), le dispositif de contrôle des défaillances (7) étant situé à l'intérieur du boîtier de feu (3).

3. Feu à LED (1) selon la revendication 2,
**caractérisé en ce que**
le dispositif de refroidissement (12) est couplé de manière thermoconductrice à la carte de circuit de charge (9) via un dispositif de conduction de la chaleur (13).

4. Feu à LED (1) selon la revendication 3,
**caractérisé en ce que**
le dispositif de refroidissement (12) constitue une première partie du boîtier de feu (3), la jointure (14) entre le dispositif de refroidissement (12) et une deuxième partie du boîtier de feu (3) étant étanchée au moyen d'une masse de coulée (15).

5. Feu à LED (1) selon l'une des revendications précédentes,
**caractérisé en ce que**
le feu à LED (1) est conçu comme feu arrière à LED et/ou feu clignotant à LED.

6. Véhicule (2),
**caractérisé en ce que**
le véhicule (2) comporte un feu à LED (1) selon l'une des revendications 1 à 5.
